# DEMANDE DE BREVET EUROPEEN

(11) **EP 1 480 457 A2**
(43) Date de publication de la demande: **24.11.2004**
(21) Numéro de dépôt: 04364037.4
(22) Date de dépôt: 18.05.2004
(51) Int. Cl.: H04N 7/12

(54) **Procédé et système pour la gestion de la bande passante d'un service de vidéo-à-la-demande**

(30) Priorité: 21.05.2003 FR 0306117
(71) Demandeur: FRANCE TELECOM, 75015 Paris (FR)
(72) Inventeur: Yclon, Joel, 35700 Rennes (FR)
(74) Mandataire: Vidon, Patrice

(57) **Abrégé**

L'invention concerne un procédé de gestion de bande passante pour la mise en oeuvre d'un service de vidéo à la demande présentant une pluralité de modes d'accès, dont un mode streaming et au moins un mode téléchargement, ledit service de vidéo à la demande s'appuyant sur au moins un serveur (3) avec lequel des terminaux clients (1) peuvent communiquer via au moins un réseau (4). Ce procédé comprend une phase d'initialisation et une phase de fonctionnement. La phase d'initialisation comprend les étapes suivantes : on associe une bande passante au serveur ; on répartit entre la pluralité de modes d'accès la bande passante associée au serveur, selon un profil de répartition prédéterminé et tel que chacun des modes d'accès est privilégié dans au moins une sous-plage temporelle dudit profil de répartition. La phase de fonctionnement comprend l'étape suivante, pour chaque requête client selon un mode d'accès donné : on autorise l'accès demandé si, pour le mode d'accès donné et en fonction d'une part du profil de répartition et d'autre part de la bande passante déjà réservée, il y a suffisamment de bande passante disponible au sein de la bande passante associée au serveur.

## Description

Le domaine de l'invention est celui des services de vidéo à la demande (ou VOD, pour « Video On Demand » en anglais), s'appuyant sur des serveurs avec lesquels des terminaux clients peuvent communiquer via un ou plusieurs réseaux.

Plus précisément, l'invention concerne un procédé et un système de gestion de bande passante pour la mise en oeuvre d'un service de vidéo à la demande présentant plusieurs modes d'accès, dont un mode streaming et au moins un mode téléchargement. En d'autres termes, l'invention concerne la gestion de ressources réseau adaptées au domaine de l'audiovisuel.

L'invention s'applique notamment, mais non exclusivement, à un service de vidéo à la demande, en mode, streaming et téléchargement, sur un réseau d'accès cuivre en ADSL (pour « Asynchronous Digital Subscriber Line » en anglais, c'est-à-dire « ligne d'abonné numérique asymétrique »).

On connaît, dans l'état de la technique, deux types de service de vidéo à la demande : ceux en mode streaming (ou mode continu) et ceux en mode téléchargement.

Dans les services de vidéo à la demande en mode streaming (ou mode continu), les terminaux des clients reçoivent en temps réel (accès immédiat) de la vidéo (typiquement des films) à partir d'un serveur et via un réseau. Le serveur assure une fonction magnétoscope.

Des systèmes permettant d'offrir ces services de VOD en mode streaming ont été mis en oeuvre dans le cadre de débuts de déploiement ou d'expérimentations en cours. Ils sont essentiellement basés sur un surdimensionnement du réseau entre les clients et le serveur. Une première évolution consiste à gérer au niveau du serveur un nombre maximal de sessions ou un débit maximal. A terme, les futures approches de gestion de ressources réseau permettront de gérer la bande passante nécessaire pour les services de vidéo à la demande en mode streaming, moyennant la définition d'interface standard entre le réseau et les plates-formes de services. Ces futures approches sont soit de type CAC (pour « connection admission control » en anglais, c'est-à-dire « contrôle d'admission de connexion »), contrôlant que les ressources réseau configurées ne sont pas dépassées, soit permettant la configuration dynamique des ressources du réseau.

Les services de vidéo à la demande en mode téléchargement s'appuient quant à eux sur la présence d'un disque dur dans les terminaux des clients Le film est téléchargé à l'avance sur ce disque dur. Ce mode de téléchargement comporte différentes variantes
- mode téléchargement individuel : demande individuelle de téléchargement avec différents délais de disponibilité (6h, 24h). En général, une tarification différentiée est proposée : le service est moins cher si le client accepte un délai de disponibilité plus long (c'est-à-dire s'il accepte un téléchargement à une distance dans le temps plus grande) ;
- mode téléchargement groupé : téléchargement d'un film à une date donnée vers un groupe de clients.

Les services de vidéo à la demande en mode streaming nécessitent un débit garanti élevé. Par ailleurs, l'usage de ces services est essentiellement concentré le soir. Ceci induit un dimensionnement du réseau entre le serveur et les clients très élevé, avec un impact sur le coût du service (le réseau étant sous utilisé en dehors des périodes de pointe).

Un autre inconvénient des techniques antérieures est qu'elles n'apportent pas de solutions pour traiter dans une même offre de service les différents modes d'accès à la VOD (mode streaming et modes téléchargement individuel ou groupé).

Encore un autre inconvénient est qu'elles ne tiennent pas non plus compte de la cohabitation sur une partie du réseau (sur la ligne de cuivre dans l'exemple précité d'un réseau d'accès cuivre en ADSL), du service de VOD avec un service de télévision diffusé (contrainte de débit réduit sur la ligne de cuivre du client).

L'invention a notamment pour objectif de pallier ces différents inconvénients de l'état de la technique.

Plus précisément, l'un des objectifs de la présente invention est de fournir un procédé et un système de gestion de bande passante pour la mise en oeuvre d'un service de vidéo à la demande à plusieurs modes d'accès, permettant d'optimiser le dimensionnement du réseau et donc les coûts de mise en oeuvre du service.

L'invention a également pour objectif de fournir de tels procédé et système permettant de gérer les conflits de simultanéité entre les différents modes d'accès à la vidéo et des services de télévision (par exemple, l'enregistrement sur magnétoscope) sur le réseau d'accès. Notamment, il s'agit d'assurer une compatibilité maximale entre un service de VOD en mode téléchargement et un service de télévision sur le réseau d'accès (par exemple de type ADSL).

Un autre objectif de l'invention est de fournir de tels procédé et système qui soient simples à mettre en oeuvre et peu coûteux.

Ces différents objectifs, ainsi que d'autres qui apparaîtront par la suite, sont atteints selon l'invention à l'aide d'un procédé de gestion de bande passante pour la mise en oeuvre d'un service de vidéo à la demande présentant une pluralité de modes d'accès, dont un mode streaming et au moins un mode téléchargement, ledit service de vidéo à la demande s'appuyant sur au moins un serveur avec lequel des terminaux clients peuvent communiquer via au moins un réseau, ledit procédé comprenant :
- une phase d'initialisation comprenant les étapes suivantes :
   * on associe une bande passante au serveur ;
   * on répartit entre la pluralité de modes d'accès la bande passante associée au serveur, selon un profil de répartition prédéterminé et tel que chacun des modes d'accès est privilégié dans au moins une sous-plage temporelle dudit profil de répartition ;
- une phase de fonctionnement comprenant l'étape suivante, pour chaque requête client selon un mode d'accès donné :
   * on autorise l'accès demandé si, pour le mode d'accès donné et en fonction d'une part du profil de répartition et d'autre part de la bande passante déjà réservée, il y a suffisamment de bande passante disponible au sein de la bande passante associée au serveur.

Le principe général de l'invention consiste donc à proposer plusieurs modes d'accès au sein d'un même service de vidéo à la demande, et à étaler dans le temps le trafic global du service en affectant, en fonction du profil de répartition, les pointes de trafic de chaque mode d'accès dans des tranches horaires différentes. Le procédé selon l'invention permet donc de gérer de manière souple le partage de la bande passante du serveur entre les différents modes d'accès à la vidéo (streaming et téléchargement).

Ceci permet de réduire le dimensionnement de la configuration réseau requise et donc de réduire les coûts de mise en oeuvre du service de VOD.

De façon avantageuse, la phase d'initialisation comprend en outre l'étape suivante : on associe une bande passante disponible à chaque composant du réseau. Et la phase de fonctionnement comprend en outre l'étape suivante, pour chaque requête client selon un mode d'accès donné : on autorise l'accès demandé s'il y a suffisamment de bande passante disponible au sein de la bande passante disponible associée à chacun des composants réseau nécessaires à la fourniture du service demandé par la requête client.

Avantageusement, ledit au moins un mode téléchargement appartient au groupe comprenant : des modes téléchargement individuel, avec chacun un délai de disponibilité prédéterminé (6h, 24h, etc.), et des modes téléchargement groupé.

Dans un mode de réalisation particulier de l'invention, les composants du réseau appartiennent au groupe comprenant : des serveurs d'accès large bande (BAS) et des multiplexeurs d'accès de ligne numérique d'abonné (DSLAM).

Selon une caractéristique avantageuse, le profil de répartition de la bande passante associée au serveur définit une répartition entre la pluralité de modes d'accès et au moins un service complémentaire.

Préférentiellement, le profil de répartition est tel qu'une partie de la bande passante associée au serveur est réservée à un usage partagé entre la pluralité de modes d'accès et, éventuellement, au moins un service complémentaire.

Avantageusement, ledit au moins un service complémentaire appartient au groupe comprenant :
- des services de gestion de dialogues et/ou de protocoles de commandes au sein du réseau ;
- des services de mise à jour de logiciels compris dans les terminaux clients.

De façon préférentielle, la partie de la bande passante associée au serveur qui est réservée à un usage partagé est utilisée :
- pour le mode streaming ; et/ou
- en cas de conflits entre différents modes d'accès ; et/ou
- en cas d'interruption d'un téléchargement suite à un incident technique.

Dans un mode de réalisation particulier de l'invention, le profil de répartition de la bande passante associée au serveur est cyclique, avec un cycle de 24 heures.

Avantageusement, le profil de répartition de la bande passante associée au serveur est défini par tranches horaires d'une durée prédéterminée comprise entre 20 et 40 minutes, et préférentiellement égale à 30 minutes.

Dans un mode de réalisation avantageux de l'invention, le profil de répartition comprend au moins une première sous-plage temporelle dans laquelle le mode streaming est privilégié du fait que ladite première sous-plage temporelle correspond à une période de pointe pour des requêtes client selon le mode streaming. Préférentiellement, la sous-plage temporelle dans laquelle le mode streaming est privilégié commence entre 18 heures et 20 heures d'un jour courant, et se termine entre 23 heures du jour courant et 1 heure du jour suivant.

De façon avantageuse, le profil de répartition comprend au moins une deuxième sous-plage temporelle dans laquelle un mode téléchargement à délai de disponibilité réduit est privilégié. La deuxième sous-plage temporelle est située avant la première sous-plage temporelle.

Avantageusement, le profil de répartition comprend au moins une deuxième sous-plage temporelle dans laquelle un mode téléchargement à délai de disponibilité réduit est privilégié. Suite à une requête client selon ledit mode téléchargement à délai de disponibilité réduit, le téléchargement demandé est planifié au plus tôt et non obligatoirement dans ladite deuxième sous-plage temporelle.

De façon avantageuse, le profil de répartition comprend au moins une troisième sous-plage temporelle dans laquelle un mode téléchargement à délai de disponibilité long est privilégié. La troisième sous-plage temporelle est située après la première sous-plage temporelle.

Avantageusement, le profil de répartition comprend au moins une troisième sous-plage temporelle dans laquelle un mode téléchargement à délai de disponibilité long est privilégié. Suite à une requête client selon ledit mode téléchargement à délai de disponibilité long, le téléchargement demandé est planifié en priorité, lorsque c'est possible, au plus tôt dans ladite troisième sous-plage temporelle.

Préférentiellement, le délai de disponibilité court est compris entre 2 et 10 heures, et le délai de disponibilité long est compris entre 20 et 28 heures.

Dans un mode de réalisation préférentiel de l'invention, la phase de fonctionnement comprend en outre l'étape suivante, pour chaque requête client selon un mode d'accès donné : on détecte et on gère, quand il existe, un éventuel conflit entre d'une part le mode d'accès donné et d'autre part un des autres modes d'accès et/ou un service de télévision dont bénéficie, via le réseau, le client ayant émis la requête.

Dans un mode de réalisation particulier de l'invention, la phase de fonctionnement comprend en outre les étapes suivantes :
- on associe un calendrier de gestion de bande passante à chacun des équipements suivants : serveur, composants du réseau et terminaux client, chaque calendrier étant découpé en unités de temps, le calendrier associé au serveur tenant compte dudit profil de répartition ;
- on maintient à jour, pour chaque unité de temps d'un calendrier associé à un équipement donné, la bande passante disponible au sein de la bande passante associée audit équipement donné.

Avantageusement, la phase de fonctionnement comprend en outre une étape d'adaptation dynamique du profil de répartition de la bande passante associée au serveur, en fonction de l'usage réel de cette bande passante.

L'invention concerne également un programme d'ordinateur comprenant des instructions de code de programme pour l'exécution des étapes du procédé précité, lorsque ledit programme est exécuté sur un ordinateur.

L'invention concerne aussi un système de gestion de bande passante pour la mise en oeuvre d'un service de vidéo à la demande présentant une pluralité de modes d'accès, dont un mode streaming et au moins un mode téléchargement, ledit service de vidéo à la demande s'appuyant sur au moins un serveur avec lequel des terminaux clients peuvent communiquer via au moins un réseau, ledit système comprenant un dispositif de gestion de bande passante comprenant :
- des moyens d'association d'une bande passante au serveur ;
- des moyens de répartition entre la pluralité de modes d'accès la bande passante associée au serveur, selon un profil de répartition prédéterminé et tel que chacun des modes d'accès est privilégié dans au moins une sous-plage temporelle dudit profil de répartition ;
- des premiers moyens d'autorisation de l'accès demandé si, pour chaque requête client selon un mode d'accès donné, pour le mode d'accès donné et en fonction d'une part du profil de répartition et d'autre part de la bande passante déjà réservée, il y a suffisamment de bande passante disponible au sein de la bande passante associée au serveur.

L'invention concerne encore le dispositif de gestion de bande passante précité.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un synoptique partiel d'un mode de réalisation particulier du système selon l' invention ;
- la figure 2 présente un exemple de profil de répartition de bande passante selon l'invention ;
- la figure 3 présente le profil de configuration de bande passante pour le mode téléchargement à 24 heures, dans le cas du profil de répartition illustré sur la figure 2 ;
- la figure 4 présente un organigramme d'un mode de réalisation particulier du procédé de gestion de bande passante selon l'invention, pour la partie relative au mode streaming d'un service de vidéo à la demande ;
- la figure 5 présente un organigramme d'un mode de réalisation particulier de l'étape de test de simultanéité de services apparaissant dans l'organigramme de la figure 1 ;
- la figure 6 présente un organigramme d'un mode de réalisation particulier de l'étape de test de disponibilité de bande passante apparaissant dans l'organigramme de la figure 1 ;
- la figure 7 présente un organigramme d'un mode de réalisation particulier des étapes de réservation et libération de bande passante apparaissant dans l'organigramme de la figure 1 ;
- la figure 8 présente un organigramme d'un mode de réalisation particulier du procédé de gestion de bande passante selon l'invention, pour la partie relative au mode téléchargement à 24 heures d'un service de vidéo à la demande.

L'invention concerne donc un procédé et un système de gestion de bande passante pour la mise en oeuvre d'un service de vidéo à la demande présentant plusieurs modes d'accès.

Dans la suite de la description, on suppose que le service de vidéo à la demande présente les modes d'accès suivants :
- un mode streaming ;
- un mode téléchargement à 6 heures ;
- un mode téléchargement à 24 heures ;
- un mode téléchargement groupe.

Il est clair cependant que de nombreuses autres combinaisons de modes d'accès peuvent être envisagées sans sortir du cadre de la présente invention.

Le service de vidéo à la demande s'appuie sur au moins un serveur avec lequel des terminaux clients peuvent communiquer via au moins un réseau

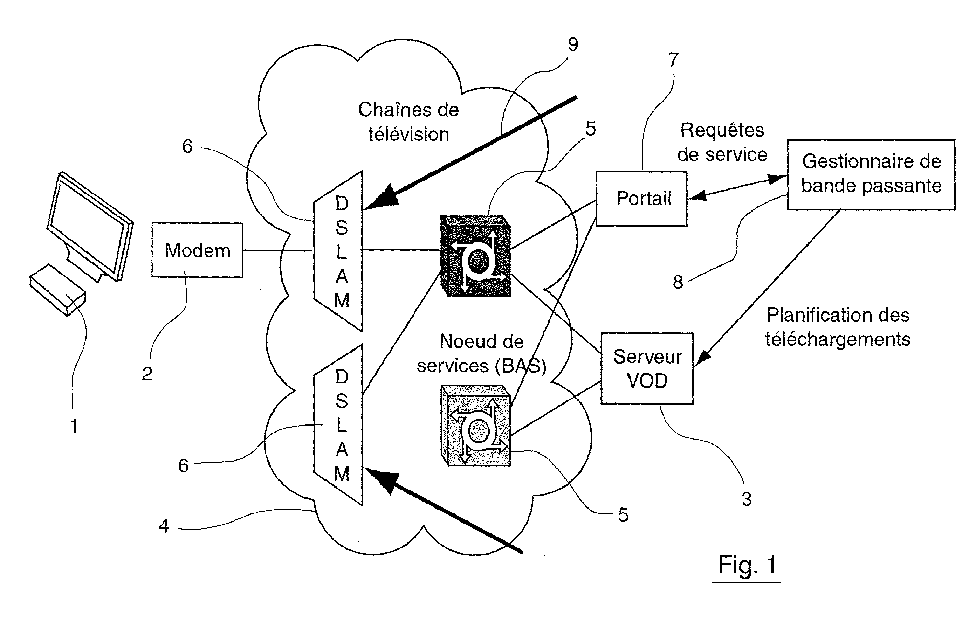

Dans le mode de réalisation particulier illustré par le synoptique partiel de la **figure 1,** le système selon l'invention comprend :
- une pluralité de terminaux clients 1 associés chacun à un modem 2 (dans un souci de simplification, un seul couple terminal client / modem est représenté sur la figure 1) ;
- un serveur de vidéo à la demande 3 ;
- un réseau 4 comprenant des composants, et notamment des noeuds de service 5 (appelés ci-après composants BAS, pour « Broadband Access Server » en anglais, c'est-à-dire « serveur d'accès large bande ») et des multiplexeurs d'accès de ligne numérique d'abonné 6 (appelés ci-après composants DSLAM, pour « Digital Subscriber Line Access Multiplexer » en anglais) ;
- un portail web 7 ;
- un dispositif de gestion de bande passante 8 (aussi appelé gestionnaire de bande passante).

Dans l'exemple discuté ci-après, on suppose en outre que les terminaux clients 1 bénéficient, via le réseau 4 (par exemple un réseau ADSL), d'un service de télévision 9.

Avec ce système de gestion de bande passante pour la mise en oeuvre d'un service de vidéo à la demande, deux phases peuvent être distinguées : une phase d'initialisation (configuration du dispositif de gestion de bande passante 8) et une phase de fonctionnement (réservation/libération de bande passante par le dispositif de gestion de bande passante 8).

Au cours de la phase d'initialisation, l'exploitant du service de vidéo à la demande saisit la bande passante réservée aux services gérés par le dispositif de gestion de bande passante 8. Plus précisément, l'exploitant associe une bande passante descendante (serveur vers clients) à chacun des composants (BAS 5, DSLAM 6) du réseau, ainsi qu'à la sortie du serveur 3.

Une période d'indisponibilité pour les composants réseau est prévue pour des opérations de maintenance. L'exploitant dispose également des fonctions pour ajouter ou supprimer des composants. Optionnellement, cette configuration est importée à partir d'un gestionnaire de réseau.

Dans le cas d'une pluralité de serveurs, chaque serveur peut desservir un sous réseau (par chaînage entre serveur et composants réseau). Ainsi, le dispositif de gestion de bande passante 8 est en mesure de gérer un parc de serveurs décentralisés, par exemple utilisés chacun dans une zone géographique distincte.

Toujours au cours de la phase d'initialisation, l'exploitant du service de vidéo à la demande répartit la bande passante associée au serveur entre les différents modes d'accès à la vidéo à la demande (VOD) et d'autres services. Cette répartition s'effectue selon un profil de répartition prédéterminé et tel que chacun des modes d'accès est privilégié dans au moins une sous-plage temporelle du profil de répartition.

L'exploitant définit différentes configurations de répartition de la bande passante associée au serveur entre :
- des services de gestion (dialogue en mode web entre le terminal client 1 et le portail web 7 pour choisir un film, protocoles de commandes pour la mise en oeuvre des services, etc.) ;
- le service de vidéo à la demande en mode streaming ;
- le service de vidéo à la demande en mode téléchargement avec un délai de 6 heures ;
- le service de vidéo à la demande en mode téléchargement avec un délai de 24 heures ;
- un service de mise à jour du logiciel des terminaux clients.

Optionnellement, le profil de répartition tient compte du fait qu'une partie de la bande passante associée au serveur est réservée à un usage partagé entre la pluralité de modes d'accès et les services complémentaires précités (service de gestion, service de mise à jour, ...). Cette « bande passante partagée » est par exemple utilisée, dans un ordre de priorité décroissant, pour le mode streaming, ou en cas de conflits entre différents modes d'accès, ou encore en cas d'interruption d'un téléchargement suite à un incident technique.

Le profil de répartition est défini par tranches horaires (typiquement d'une demi-heure chacune). L'exploitant affecte à chaque tranche horaire l'une des configurations de répartition définies.

Optionnellement, on met en oeuvre un mécanisme d'adaptation dynamique du profil de répartition de la bande passante associée au serveur, en fonction de l'usage réel de cette bande passante. On utilise alors des moyens d'obtention et de traitement des traces de cet usage réel (refus de service, etc.).

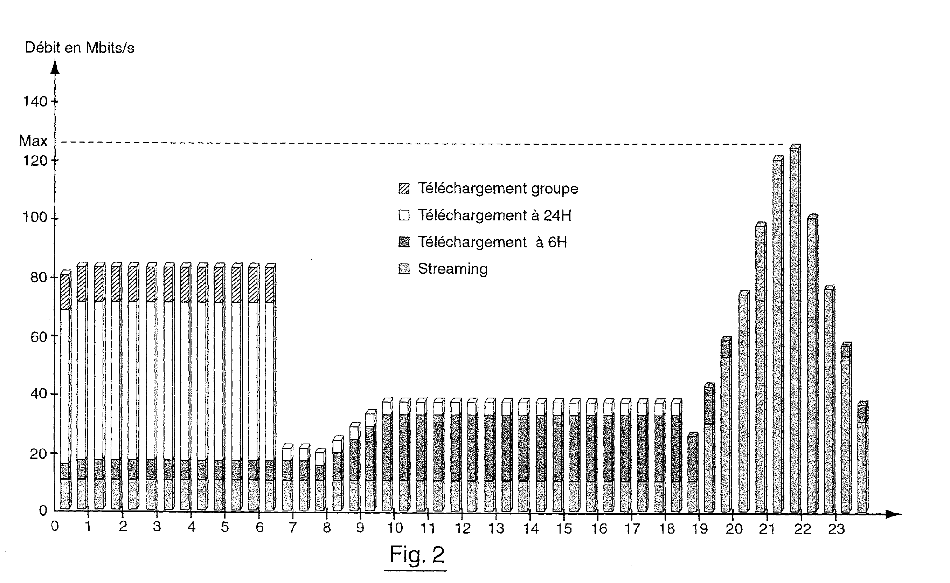

On présente maintenant, en relation avec la **figure 2,** un exemple de profil de répartition de la bande passante associée au serveur. Ce profil est cyclique, avec un cycle de 24 heures. Il est défini par tranches horaires d'une demi-heure.

Dans un souci de simplification, on n'a pas représenté sur la figure 2 la bande passante partagée : sa valeur varie d'une tranche horaire à l'autre et est par exemple égale, pour chaque tranche horaire, à la différence entre la valeur de la bande passante totale allouée au serveur et le total cumulé des parties de la bande passante allouée aux différents modes d'accès. Ainsi, dans l'exemple de la figure 2, la bande passante totale est égale 125 Mbits/s et la bande passante partagée (non représentée) est égale à 43 Mbits pour la tranche horaire 0h-0h30, 41 Mbits/s pour chacune des tranches horaires entre 0h30 et6h30, 100 Mbits/s pour la tranche horaire 6h30-7h, etc. Dans le même souci de simplification, on n'a pas représenté non plus sur la figure 2 la partie de la bande passante réservée aux services complémentaires (service de gestion, service de mise à jour, ...).

Dans cet exemple, le profil de répartition comprend :
- une première sous-plage temporelle (« soirée »), comprise entre 18h30 et minuit et dans laquelle le mode streaming est privilégié. En effet, la soirée est typiquement une période de pointe pour des requêtes client selon le mode streaming ;
- une deuxième sous-plage temporelle (« journée »), comprise entre 8h et 19h et dans laquelle le mode téléchargement à 6 heures est privilégié. Cette deuxième sous-plage temporelle est située avant la première (« soirée »), de façon que les clients puisse regarder dans la soirée ou la nuit les films qu'ils ont téléchargés ;
- une troisième sous-plage temporelle (« nuit »), comprise entre minuit et 6h30 et dans laquelle le mode téléchargement à 24 heures et le mode téléchargement groupé sont privilégiés. Cette troisième sous-plage temporelle est située après la première (« soirée »), de façon que le mode téléchargement à 24 heures et le mode téléchargement groupé gênent le moins possible le mode streaming et le mode téléchargement à 6 heures.

Il est clair que d'autres profils peuvent être envisagés sans sortir du cadre de la présente invention. Par exemple, le profil peut être cyclique, avec un cycle d'une semaine. Dans ce cas, la répartition peut être variable au sein de chaque journée et aussi d'une journée à l'autre.

Au cours de la phase de fonctionnement, le dispositif de gestion de bande passante 8 reçoit des requêtes au travers du portail web 7 en charge du dialogue avec les terminaux clients 1. Il répond au portail 7 en acceptant ou refusant la requête selon qu'il y a suffisamment ou non de bande passante disponible.

Plus précisément, pour chaque requête client selon un mode d'accès donné, le dispositif de gestion de bande passante 8 autorise l'accès demandé :
- si, pour le mode d'accès donné et en fonction d'une part du profil de répartition et d'autre part de la bande passante déjà réservée, il y a suffisamment de bande passante disponible au sein de la bande passante associée au serveur 3 ; et
- s'il y a suffisamment de bande passante disponible au sein de la bande passante disponible associée à chacun des composants réseau nécessaires à la fourniture du service demandé par la requête client. Les composants réseau (BAS 5, DSLAM 6) et le serveur 3 concernés sont par exemple identifiés à partir de l'adresse IP du terminal client 1.

Le dispositif de gestion de bande passante 8 planifie également dans le temps, selon des algorithmes appropriés, les moments de téléchargements individuels. Il prend également en compte la planification des téléchargements destinés à des groupes de clients (« téléchargements groupés »). Cette planification, qui est à la charge de l'exploitant du service, est faite avant les demandes (de téléchargement) individuelles des clients. Le dispositif 8 gère également la bande passante nécessaire pour la mise à jour du logiciel des terminaux clients 1. Le dispositif de gestion de bande passante 8 peut être facilement étendu à d'autres services. ,

Le dispositif de gestion de bande passante 8 est basé sur la gestion de calendriers affectés à chaque composant réseau (BAS 5, DSLAM 6) et serveur 3. Chaque calendrier est par exemple découpé en unité de temps fixes (aussi appelées « tranches » dans la suite la description), typiquement de 5 minutes. Un calendrier est également affecté à chaque terminal client 1 de manière à programmer les téléchargements à venir.

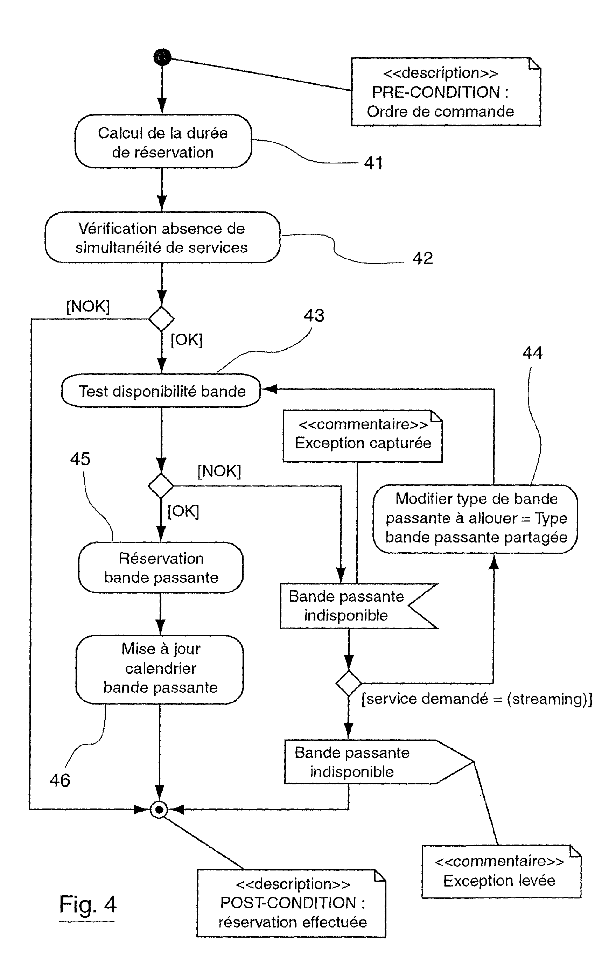

On présente maintenant, en relation avec l'organigramme de la **figure 4,** un mode de réalisation particulier du procédé de gestion de bande passante selon l'invention, pour la partie relative au mode streaming d'un service de vidéo à la demande.

Etape référencée 41 : on calcule la durée de visualisation, égale à la durée du film augmentée d'un temps proportionnel à la durée du film pour les fonctions magnétoscope.

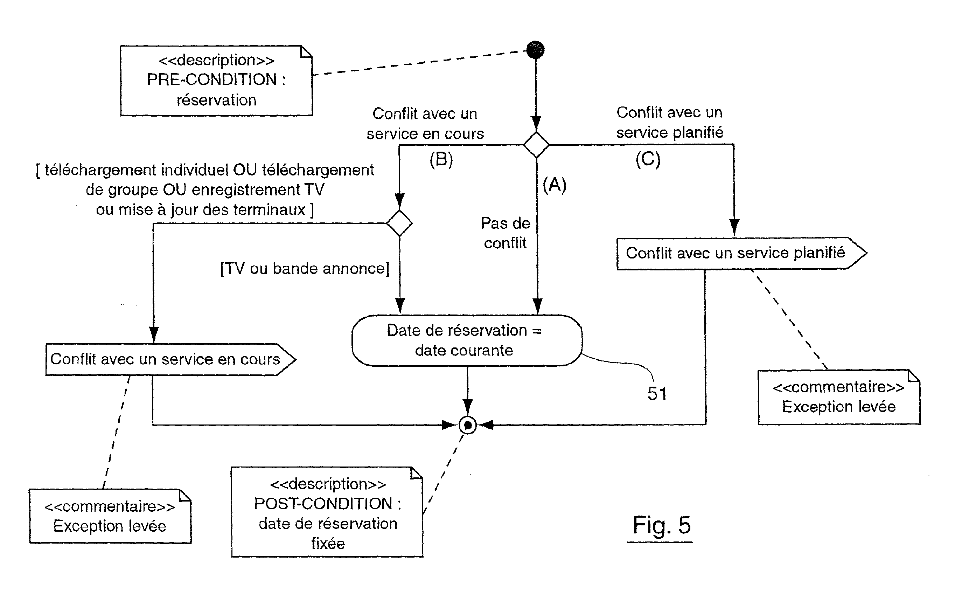

Etape référencée 42 : on détecte une éventuelle simultanéité de services (voir ci-après la description détaillée de la figure 5). En cas de simultanéité avec un autre mode d'accès du service de vidéo à la demande (téléchargement) et/ou avec un autre service, on termine l'algorithme, sinon on passe à l'étape référencée 43.

Etape référencée 43 : on teste si une partie suffisamment grande de la bande passante réservée pour le mode streaming est encore disponible (voir ci-après la description détaillée de la figure 5). Si c'est le cas, on passe à l'étape référencée 45.

Etape référencée 44 : si ce n'est pas le cas, on modifie le type de bande passante à allouer, en prenant bande passante partagée. Puis, on recommence le test de disponibilité avec cette bande passante partagée : si une partie suffisamment grande de la bande passante partagée est encore disponible, on passe à l'étape référencée 45, sinon on termine l'algorithme en indiquant l'absence de bande passante disponible.

Etape référencée 45 : on réserve la bande passante nécessaire (voir ci-après la description détaillée de la figure 5).

Etape référencée 46 : on met à jour les calendriers des différents éléments concernés (serveur, composants BAS et DSLAM, terminal client) par la fourniture du service au client (voir ci-après la description détaillée de la figure 5).

On présente maintenant, en relation avec l'organigramme de la **figure 5,** un mode de réalisation particulier de l'étape (référencée 42) de test de simultanéité de services apparaissant dans l'organigramme de la figure 1.

On distingue trois cas correspondant aux trois branches de l'algorithme :
- branche référencée A : si aucun conflit n'est détecté, on passe à l'étape référencée 51, au cours de laquelle on prend la date courante comme date de réservation ;
- branche référencée B : si un conflit avec un service en cours est détecté, soit on passe à l'étape référencée 51 (voir ci-dessus), si le service en cours est la visualisation d'une émission de télévision ou d'une bande annonce, soit on termine l'algorithme en indiquant ce conflit ;
- branche référencée C : si un conflit avec un service planifié est détecté, on termine l'algorithme en indiquant ce conflit, si le service en cours est un téléchargement individuel, un téléchargement de groupe, un enregistrement d'une émission de télévision ou encore une mise à jour du logiciel du terminal client.

Dans les branches référencées B et C, des traitements d'exception permettent les comportements suivants :
- dans le cas d'un conflit avec un téléchargement différé (en cours ou prévu) : le client peut choisir d'attendre la fin du téléchargement en cours, sinon le téléchargement est décalé après la fin d'usage du service de VOD en streaming ;
- dans le cas d'un conflit avec un téléchargement de groupe ou enregistrement d'une émission de télévision (en cours ou prévu) : le client peut choisir entre les deux services en conflit ;
- dans le cas d'un conflit avec la mise à jour du logiciel du terminal client : le client attend la fin de la mise à jour.

Pour assurer cette gestion de conflits, le dispositif de gestion de bande passante 8 connaît l'activité immédiate du terminal client 1 et celle prévue par la gestion du calendrier de ce terminal client.

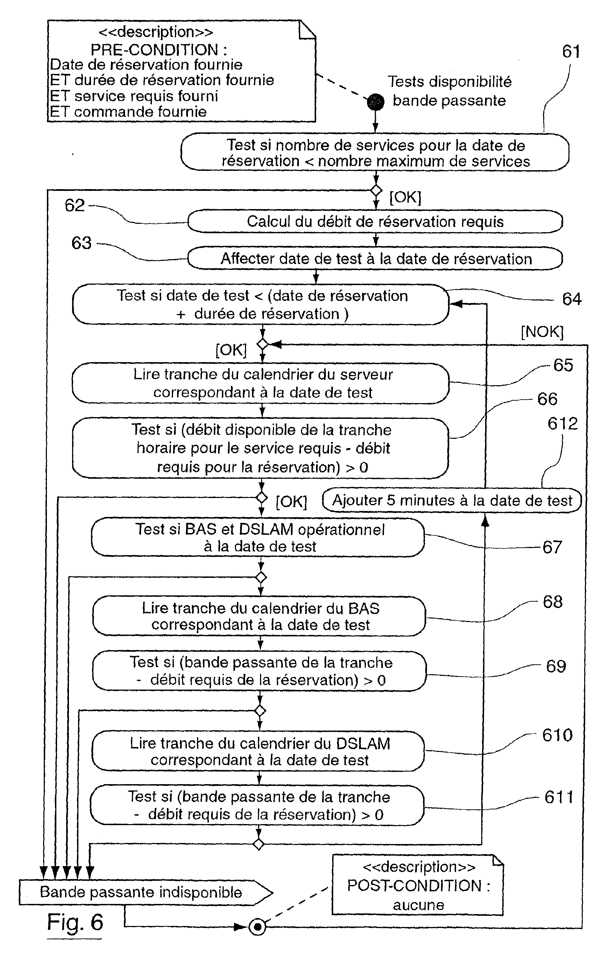

On présente maintenant, en relation avec l'organigramme de la **figure 6,** un mode de réalisation particulier de l'étape (référencée 43) de test de disponibilité de bande passante apparaissant dans l'organigramme de la figure 1.

Etape référencée 61 : si le nombre de session maximal en cours est atteint à la date de réservation, terminer l'algorithme, sinon continuer (test de dépassement de la capacité serveur exprimée en nombre maximal de sessions simultanées).

Etape référencée 62 : calcul du débit requis pour le service de vidéo à la demande en mode streaming.

Etape référencée 63 : initialiser la date de balayage des calendriers de réservation à la date de réservation demandée.

Etape référencée 64 : si la date de balayage est inférieure à la date de réservation augmentée de la durée de réservation, continuer l'algorithme, sinon terminer l'algorithme en indiquant que la bande passante est disponible.

Etape référencée 65 : lire dans le calendrier du serveur (donc en tenant compte de la répartition de la bande passante préalablement fixée par l'exploitant) la bande passante disponible de la tranche correspondant à la date de balayage..

Etape référencée 66 : s'il ne reste pas suffisamment de bande passante disponible, terminer l'algorithme en indiquant qu'il n'y a pas de bande passante disponible pour la date de réservation demandée, sinon continuer.

Etape référencée 67 : si les composants réseaux BAS 5 et DSLAM 6 nécessaires à la fourniture du service pour le client demandeur ne sont pas opérationnels, terminer l'algorithme en indiquant qu'il n'y a pas de bande passante disponible pour la date de réservation demandée, sinon continuer.

Etape référencée 68 : lire dans le calendrier du composant BAS 5 nécessaire à la fourniture du service pour le client demandeur la bande passante disponible de la tranche correspondant à la date de balayage.

Etape référencée 69 : s'il ne reste pas suffisamment de bande passante disponible, terminer l'algorithme en indiquant qu'il n'y a pas de bande passante disponible pour la date de réservation demandée, sinon continuer.

Etape référencée 610 : lire dans le calendrier du composant DSLAM 6 nécessaire à la fourniture du service pour le client demandeur la bande passante disponible de la tranche correspondant à la date de balayage.

Etape référencée 611 : s'il ne reste pas suffisamment de bande passante disponible, terminer l'algorithme en indiquant qu'il n'y a pas de bande passante disponible pour la date de réservation demandée, sinon continuer.

Etape référencée 612 : incrémenter la date de balayage de 5 minutes et continuer l'algorithme à l'étape référencée 64.

L'allocation de bande passante se fait par unité ("tranche") de durée fixe (5 minutes par exemple).

A partir de l'adresse IP du terminal client, le dispositif de gestion de bande passante 8 identifie les différents composants concernés par la fourniture du service : serveur 3, composant BAS 5, composant DSLAM 6.

Il est à noter qu'au niveau des composants réseau (BAS et DSLAM), une vérification de la bonne répartition de l'usage de la bande passante entre les services n'est pas utile (répartition supposée homogène, risque statistique sur de faibles valeurs de débit).

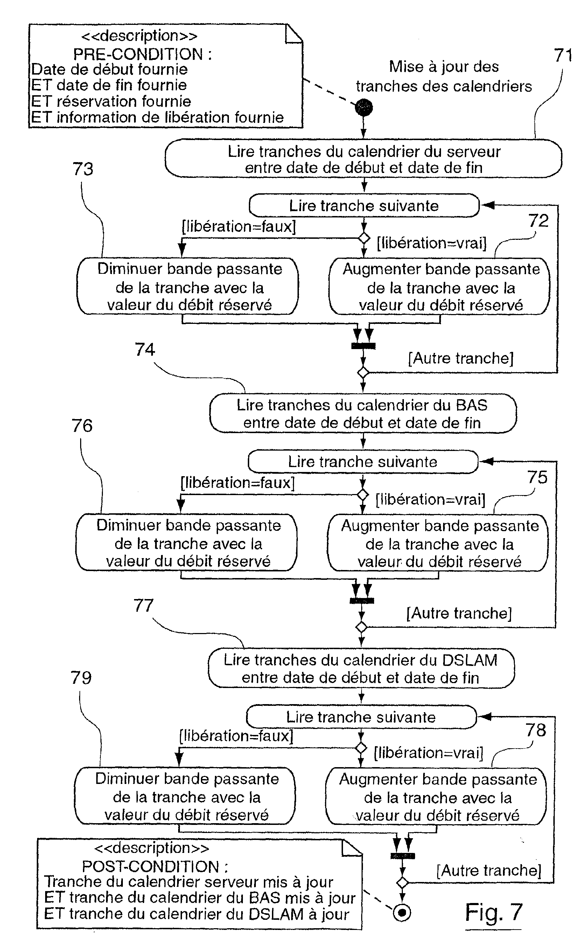

On présente maintenant, en relation avec l'organigramme de la **figure 7,** un mode de réalisation particulier des étapes (référencées 45 et 46) de réservation et libération de bande passante (mise à jour des calendriers) apparaissant dans l'organigramme de la figure 1.

Etape référencée 71 : lire les tranches du calendrier du serveur 3 pour la période de réservation ou libération (entre date de début et de fin).

Etapes référencées 72 et 73 : pour toutes les tranches, augmenter la bande passante disponible en cas de libération (étape 72) ou diminuer la bande passante disponible en cas de réservation (étape 73).

Etape référencée 74 : lire les tranches du calendrier du composant BAS 5 pour la période de réservation ou libération (entre date de début et de fin).

Etapes référencées 75 et 76 : pour toutes les tranches, augmenter la bande passante disponible en cas de libération (étape 75) ou diminuer la bande passante disponible en cas de réservation (étape 76).

Etape référencée 77 : lire les tranches du calendrier du composant DSLAM 6 pour la période de réservation ou libération (entre date de début et de fin).

Etapes référencées 78 et 79 : pour toutes les tranches, augmenter la bande passante disponible en cas de libération (étape 78) ou diminuer la bande passante disponible en cas de réservation (étape 79).

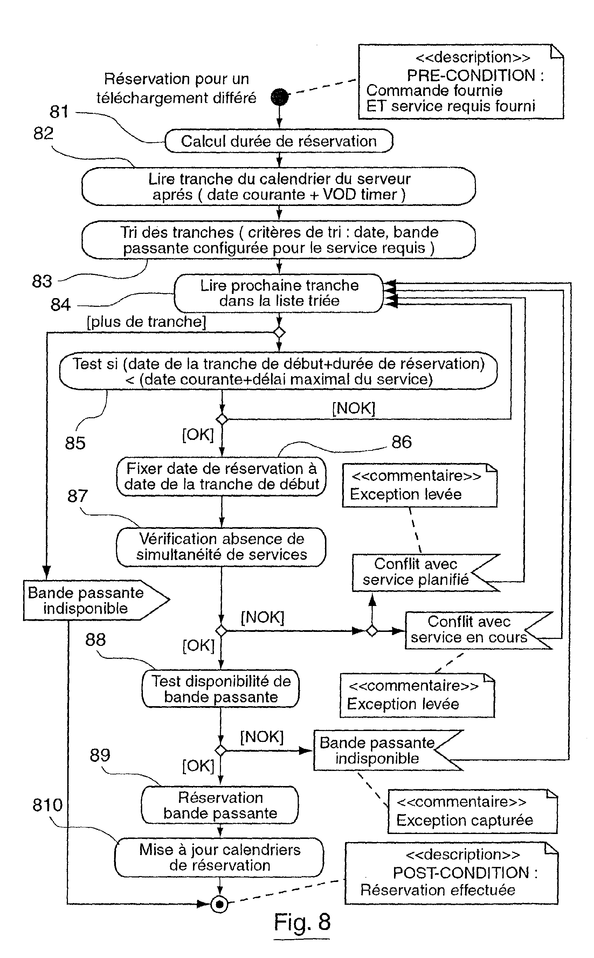

On présente maintenant, en relation avec l'organigramme de la **figure 8,** un mode de réalisation particulier du procédé de gestion de bande passante selon l'invention, pour la partie relative au mode téléchargement à 24 heures d'un service de vidéo à la demande.

Etape référencée 81 : calcul de la durée de réservation en fonction du débit configuré pour effectuer le téléchargement et le volume de données du film.

Etape référencée 82 : lire toutes les tranches du calendrier du serveur correspondant aux prochaines 24 heures.

Etape référencée 83 : trier les tranches en fonction des critères « date » et « bande passante configurée » (la première tranche correspondant à celle qui a le plus de bande passante configurée et qui est la plus proche dans le temps).

Etape référencée 84 : lire dans la liste ordonnée la tranche suivante ; initialiser la date de début de téléchargement avec la date de cette tranche (« tranche de début »)et continuer l'algorithme. S'il n'y a plus de tranche dans la liste (toutes les tranches ayant déjà été testées), terminer l'algorithme en indiquant qu'il n'y a pas de bande passante disponible.

Etape référencée 85 : si la date de fin de téléchargement prévisionnelle (égale à la date de début prévue augmentée de la durée de téléchargement) est compatible avec le délai maximal requis pour effectuer le téléchargement, continuer l'algorithme à l'étape référencée 86, sinon continuer l'algorithme à l'étape référencée 84.

Etape référencée 86 : fixer la date de réservation à la date de la « tranche de début ».

Etape référencée 87 : vérifier l'absence de simultanéité à partir de la date de la tranche courante (via un autre algorithme, identique à celui déjà décrit ci-dessus en relation avec la figure 5) ; si conflit avec autre service, continuer l'algorithme à l'étape référencée 84, sinon continuer l'algorithme à l'étape référencée 88. Le téléchargement est planifié de manière à ne pas rentrer en conflit avec un autre service, ce qui est possible du fait du délai important disponible pour effectuer le téléchargement et en s'appuyant sur le calendrier du terminal client 1.

Etape référencée 88 : tester la disponibilité de bande passante à partir de la date de la tranche courante (via un autre algorithme, identique à celui déjà décrit ci-dessus en relation avec la figure 6). S'il n'y a pas de bande passante, continuer l'algorithme à l'étape référencée 84, sinon continuer à l'étape référencée 89.

Etape référencée 89 : réserver la bande passante à partir de la date de la tranche courante (via un autre algorithme, identique à celui déjà décrit ci-dessus en relation avec la figure 7).

Etape référencée 810 : mettre à jour les calendriers de réservation (via un autre algorithme, identique à celui déjà décrit ci-dessus en relation avec la figure 7).

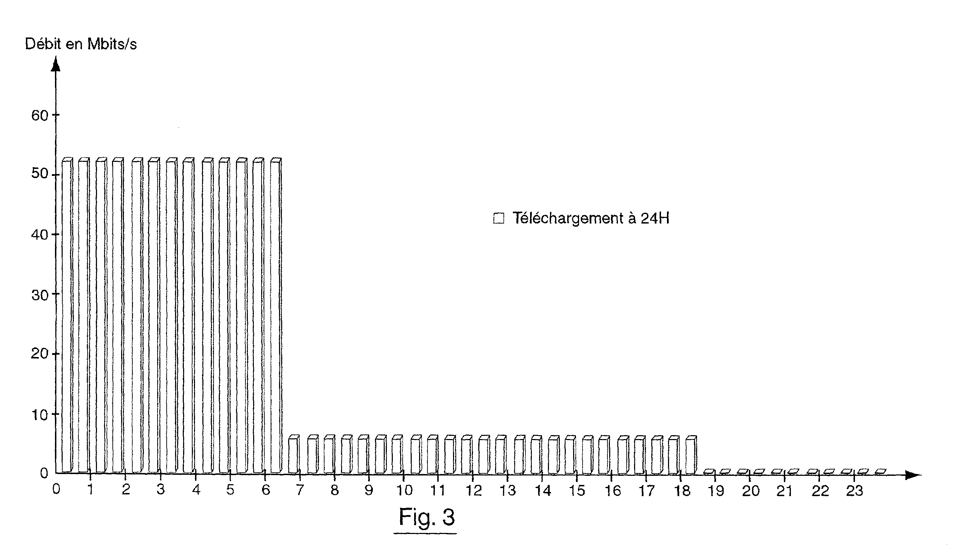

Le tri des "tranches" effectué lors de l'étape référencée 83 (voir **figure 3** pour un exemple de profil de configuration de bande passante pour le mode téléchargement à 24 heures) a pour objectif de faire en sorte qu'une demande de téléchargement initiale faite la journée soit programmée la nuit, c'est-à-dire à partir de la première "tranche" correspondant aux deux critères suivants : "tranche la plus proche" et "tranche disposant du maximum de bande passante dédiée pour le service de téléchargement à 24 heures". Ce dernier critère assure que les téléchargements à 24h se feront en priorité la nuit si le profil de ressource configuré dispose d'un maximum de bande passante la nuit pour ce type de service. Le critère "tranche la plus proche" permet de proposer un service de téléchargement avec un délai plus long, par exemple à 48 heures avec deux nuits.

Avec cet algorithme, la faible bande passante réservée dans la journée pour ce type de téléchargement à 24 heures est utilisée de préférence pour le cas d'un changement de programmation suite à un conflit de service (par exemple avec un usage de la VOD en streaming la nuit par exemple).

En cas d'incident technique (panne d'un équipement réseau), l'algorithme de réservation essaie dans un premier temps de planifier à nouveau les téléchargements interrompus dans la bande passante dédiée au service de téléchargement. En cas d'échec, l'allocation de bande passante peut se faire dans la bande passante partagée, de manière à respecter au mieux l'engagement sur le délai de téléchargement à 24h.

On ne présente pas en détail un mode de réalisation particulier du procédé de gestion de bande passante selon l'invention, pour la partie relative au mode téléchargement à 6 heures d'un service de vidéo à la demande. En effet, l'algorithme dans ce cas est quasi-identique à celui décrit ci-dessus en relation avec la figure 8, pour le mode téléchargement à 6 heures. La seule différence est l'absence de tri des tranches, l'allocation se faisant au plus tôt.

On ne présente pas non plus en détail un mode de réalisation particulier du procédé de gestion de bande passante selon l'invention, pour la partie relative au mode téléchargement de groupe. On notera simplement que les téléchargements de groupe sont définis par l'exploitant du service, préalablement aux demandes de téléchargement individuelles des clients. La définition de la grille de programmation des téléchargements de groupe met à jour les différents calendriers (serveurs 3, composants BAS 5 et DSLAM 6). L'abonnement d'un client à un téléchargement de groupe met également à jour son calendrier (gestion des conflits entre services).

## Revendications

1. Procédé de gestion de bande passante pour la mise en oeuvre d'un service de vidéo à la demande présentant une pluralité de modes d'accès, dont un mode streaming et au moins un mode téléchargement, ledit service de vidéo à la demande s'appuyant sur au moins un serveur (3) avec lequel des terminaux clients (1) peuvent communiquer via au moins un réseau (4), ledit procédé comprenant :
- une phase d'initialisation comprenant les étapes suivantes :
* on associe une bande passante au serveur ;
* on répartit entre la pluralité de modes d'accès la bande passante associée au serveur, selon un profil de répartition prédéterminé et tel que chacun des modes d'accès est privilégié dans au moins une sous-plage temporelle dudit profil de répartition ;
- une phase de fonctionnement comprenant l'étape suivante, pour chaque requête client selon un mode d'accès donné :
* on autorise l'accès demandé si, pour le mode d'accès donné et en fonction d'une part du profil de répartition et d'autre part de la bande passante déjà réservée, il y a suffisamment de bande passante disponible au sein de la bande passante associée au serveur.

2. Procédé selon la revendication 1, **caractérisé en ce que** la phase d'initialisation comprend en outre l'étape suivante : on associe une bande passante disponible à chaque composant (5, 6) du réseau (4),
et **en ce que** la phase de fonctionnement comprend en outre l'étape suivante, pour chaque requête client selon un mode d'accès donné : on autorise l'accès demandé s'il y a suffisamment de bande passante disponible au sein de la bande passante disponible associée à chacun des composants réseau nécessaires à la fourniture du service demandé par la requête client.

3. Procédé selon l'une quelconque des revendications 1 et 2, **caractérisé en ce que** ledit au moins un mode téléchargement appartient au groupe comprenant : des modes téléchargement individuel, avec chacun un délai de disponibilité prédéterminé (6h, 24h, etc.), et des modes téléchargement groupé.

4. Procédé selon l'une quelconque des revendications 1 à 3, **caractérisé en ce que** les composants du réseau appartiennent au groupe comprenant : des serveurs d'accès large bande (5, BAS) et des multiplexeurs d'accès de ligne numérique d'abonné (6, DSLAM).

5. Procédé selon l'une quelconque des revendications 1 à 4, **caractérisé en ce que** le profil de répartition de la bande passante associée au serveur définit une répartition entre la pluralité de modes d'accès et au moins un service complémentaire.

6. Procédé selon l'une quelconque des revendications 1 à 5, **caractérisé en ce que** le profil de répartition est tel qu'une partie de la bande passante associée au serveur est réservée à un usage partagé entre la pluralité de modes d'accès et, éventuellement, au moins un service complémentaire.

7. Procédé selon l'une quelconque des revendications 5 et 6, **caractérisé en ce que** ledit au moins un service complémentaire appartient au groupe comprenant :
- des services de gestion de dialogues et/ou de protocoles de commandes au sein du réseau ;
- des services de mise à jour de logiciels compris dans les terminaux clients.

8. Procédé selon l'une quelconque des revendications 6 et 7, **caractérisé en ce que** la partie de la bande passante associée au serveur qui est réservée à un usage partagé est utilisée :
- pour le mode streaming ; et/ou
- en cas de conflits entre différents modes d'accès ; et/ou
- en cas d'interruption d'un téléchargement suite à un incident technique.

9. Procédé selon l'une quelconque des revendications 1 à 8, **caractérisé en ce que** le profil de répartition de la bande passante associée au serveur est cyclique, avec un cycle de 24 heures.

10. Procédé selon l'une quelconque des revendications 1 à 9, **caractérisé en ce que** le profil de répartition de la bande passante associée au serveur est défini par tranches horaires d'une durée prédéterminée comprise entre 20 et 40 minutes, et préférentiellement égale à 30 minutes.

11. Procédé selon l'une quelconque des revendications 1 à 10, **caractérisé en ce que** le profil de répartition comprend au moins une première sous-plage temporelle dans laquelle le mode streaming est privilégié du fait que ladite première sous-plage temporelle correspond à une période de pointe pour des requêtes client selon le mode streaming.

12. Procédé selon la revendication 11, **caractérisé en ce que** la sous-plage temporelle dans laquelle le mode streaming est privilégié commence entre 18 heures et 20 heures d'un jour courant, et se termine entre 23 heures du jour courant et 1 heure du jour suivant.

13. Procédé selon l'une quelconque des revendications 11 et 12, **caractérisé en ce que** le profil de répartition comprend au moins une deuxième sous-plage temporelle dans laquelle un mode téléchargement à délai de disponibilité réduit est privilégié,
et **en ce que** la deuxième sous-plage temporelle est située avant la première sous-plage temporelle.

14. Procédé selon l'une quelconque des revendications 1 à 13, **caractérisé en ce que** le profil de répartition comprend au moins une deuxième sous-plage temporelle dans laquelle un mode téléchargement à délai de disponibilité réduit est privilégié,
et **en ce que**, suite à une requête client selon ledit mode téléchargement à délai de disponibilité réduit, le téléchargement demandé est planifié au plus tôt et non obligatoirement dans ladite deuxième sous-plage temporelle.

15. Procédé selon l'une quelconque des revendications 11 à 14, **caractérisé en ce que** le profil de répartition comprend au moins une troisième sous-plage temporelle dans laquelle un mode téléchargement à délai de disponibilité long est privilégié,
et **en ce que** la troisième sous-plage temporelle est située après la première sous-plage temporelle.

16. Procédé selon l'une quelconque des revendications 1 à 15, **caractérisé en ce que** le profil de répartition comprend au moins une troisième sous-plage temporelle dans laquelle un mode téléchargement à délai de disponibilité long est privilégié,
et **en ce que**, suite à une requête client selon ledit mode téléchargement à délai de disponibilité long, le téléchargement demandé est planifié en priorité, lorsque c'est possible, au plus tôt dans ladite troisième sous-plage temporelle.

17. Procédé selon l'une des revendications 13 et 14 et l'une des revendications 15 et 16, **caractérisé en ce que** le délai de disponibilité court est compris entre 2 et 10 heures, et **en ce que** le délai de disponibilité long est compris entre 20 et 28 heures.

18. Procédé selon l'une quelconque des revendications 1 à 17, **caractérisé en ce que** la phase de fonctionnement comprend en outre l'étape suivante, pour chaque requête client selon un mode d'accès donné : on détecte et on gère, quand il existe, un éventuel conflit entre d'une part le mode d'accès donné et d'autre part un des autres modes d'accès et/ou un service de télévision dont bénéficie, via le réseau, le client ayant émis la requête.

19. Procédé selon l'une quelconque des revendications 1 à 18, **caractérisé en ce que** la phase de fonctionnement comprend en outre les étapes suivantes :
- on associe un calendrier de gestion de bande passante à chacun des équipements suivants : serveur, composants du réseau et terminaux client, chaque calendrier étant découpé en unités de temps, le calendrier associé au serveur tenant compte dudit profil de répartition ;
- on maintient à jour, pour chaque unité de temps d'un calendrier associé à un équipement donné, la bande passante disponible au sein de la bande passante associée audit équipement donné.

20. Procédé selon l'une quelconque des revendications 1 à 19, **caractérisé en ce** la phase de fonctionnement comprend en outre une étape d'adaptation dynamique du profil de répartition de la bande passante associée au serveur, en fonction de l'usage réel de cette bande passante.

21. Programme d'ordinateur, **caractérisé en ce qu'**il comprend des instructions de code de programme pour l'exécution des étapes du procédé selon l'une quelconque des revendications 1 à 20, lorsque ledit programme est exécuté sur un ordinateur.

22. Système de gestion de bande passante pour la mise en oeuvre d'un service de vidéo à la demande présentant une pluralité de modes d'accès, dont un mode streaming et au moins un mode téléchargement, ledit service de vidéo à la demande s'appuyant sur au moins un serveur (3) avec lequel des terminaux clients (1) peuvent communiquer via au moins un réseau (4), ledit système comprenant un dispositif de gestion de bande passante (8) comprenant :
- des moyens d'association d'une bande passante au serveur ;
- des moyens de répartition entre la pluralité de modes d'accès la bande passante associée au serveur, selon un profil de répartition prédéterminé et tel que chacun des modes d'accès est privilégié dans au moins une sous-plage temporelle dudit profil de répartition ;
- des premiers moyens d'autorisation de l'accès demandé si, pour chaque requête client selon un mode d'accès donné, pour le mode d'accès donné et en fonction d'une part du profil de répartition et d'autre part de la bande passante déjà réservée, il y a suffisamment de bande passante disponible au sein de la bande passante associée au serveur.

23. Système selon la revendication 22, **caractérisé en ce que** le dispositif de gestion de bande passante comprend en outre :
- des moyens d'association d'une bande passante disponible à chaque composant (5, 6) du réseau ;
- des seconds moyens d'autorisation de l'accès demandé si, pour chaque requête client selon un mode d'accès donné, il y a suffisamment de bande passante disponible au sein de la bande passante disponible associée à chacun des composants réseau nécessaires à la fourniture du service demandé par la requête client.

24. Dispositif de gestion de bande passante (8), compris dans un système de gestion de bande passante pour la mise en oeuvre d'un service de vidéo à la demande présentant une pluralité de modes d'accès, dont un mode streaming et au moins un mode téléchargement, ledit service de vidéo à la demande s'appuyant sur au moins un serveur (3) avec lequel des terminaux clients (1) peuvent communiquer via au moins un réseau (4), ledit dispositif de gestion de bande passante comprenant :
- des moyens d'association d'une bande passante au serveur ;
- des moyens de répartition entre la pluralité de modes d'accès la bande passante associée au serveur, selon un profil de répartition prédéterminé et tel que chacun des modes d'accès est privilégié dans au moins une sous-plage temporelle dudit profil de répartition ;
- des moyens d'autorisation de l'accès demandé si, pour chaque requête client selon un mode d'accès donné, pour le mode d'accès donné et en fonction d'une part du profil de répartition et d'autre part de la bande passante déjà réservée, il y a suffisamment de bande passante disponible au sein de la bande passante associée au serveur.

25. Dispositif selon la revendication 24, **caractérisé en ce qu'**il comprend en outre :
- des moyens d'association d'une bande passante disponible à chaque composant (5, 6) du réseau (4) ;
- des seconds moyens d'autorisation de l'accès demandé si, pour chaque requête client selon un mode d'accès donné, il y a suffisamment de bande passante disponible au sein de la bande passante disponible associée à chacun des composants réseau nécessaires à la fourniture du service demandé par la requête client.
